Europäisches Patentamt

European Patent Office

Office européen des brevets

(11) Publication number: **0 146 017**
**A1**

# EUROPEAN PATENT APPLICATION

(21) Application number: **84114265.6**

(22) Date of filing: **26.11.84**

(51) Int. Cl.⁴: **A 01 N 57/12**, A 01 N 33/12

---

(30) Priority: **26.11.83 JP 222568/83**
**30.05.84 JP 110415/84**
**11.07.84 JP 143780/84**

(43) Date of publication of application: **26.06.85**
**Bulletin 85/26**

(84) Designated Contracting States: **DE FR GB IT NL**

(71) Applicant: **MITSUBISHI GAS CHEMICAL COMPANY,**
**INC., 5-2, Marunouchi 2-chome Chiyoda-Ku, Tokyo (JP)**

(72) Inventor: **Suzuki, Akinori, 1-105,**
**Sonno-Jutaku 1320 Sonno-cho, Chiba-shi Chiba-ken (JP)**
Inventor: **Hyeon, Suong Be, 4-1-23-5-205, Harigaya,**
**Urawa-shi Saitama-ken (JP)**
Inventor: **Ota, Yasuo, 5-634-2, Matsushiro Yatabe-machi,**
**Tsukuba-gun Ibaraki-ken (JP)**
Inventor: **Nagai, Ichiro, 2-40-11, Fujimidai, Kunitachi-shi**
**Tokyo (JP)**
Inventor: **Iesaka, Hiroyuki, 2-11-18, Nakane, Meguro-ku**
**Tokyo (JP)**
Inventor: **Furushima, Masakazu, 134-165, Kita,**
**Nagareyama-shi Chiba-ken (JP)**

(74) Representative: **Hrabal, Ulrich, Dr. Dipl.-Chem. et al,**
**MEISSNER, BOLTE & PARTNER Postfach 86 06 24,**
**D-8000 München 86 (DE)**

(54) Plant growth regulator and method for increasing crop yields and promoting root formation.

(57) A plant growth regulator which can increase the crop yields and can promote root formation and root anchorage of paddy rice. The plant growth regulator of the present invention comprises as an active ingredient at least one compound selected from the group consisting of a salt of choline, phosphorylcholine, and a salt of phosphorylcholine.

- 1 -

## Plant growth regulator and method for increasing crop yields and promoting root formation

The present invention relates to a plant growth regulator and a method for improving crop yields using the regulator.

The immersion treatment of the seedlings of sweet potato (Ipmoea batatas), with choline salts solution has been observed to improve crop yields (Special Bulletin of the Chiba-Ken Agricultural Experiment Station, No. 3, 1973). Phosphorylcholine is used as a drug for treating diseases of the liver, but its use as a plant growth regulator is not previously known.

Agricultural production can be characterized biologically as the collection of solar energy on the surface of the earth using the photosynthetic properties of green plants, and the supply of oxygen to the atmosphere. However, this is not always an efficient way to utilize solar energy. Taking a look at the world food situation, it is predicted that the world's population will approximately double by the end of the century, and that it will be extremely difficult to ensure the production of enough food to feed this population increase.

A great deal of research has been devoted to coping with this anticipated population increase. Yet, most R&D conducted with the aim of raising agricultural productivity has consisted of little more than improvements in production technology; very little effort has been directed toward gaining a detailed understanding of the functions inherent to plants and how these can be enhanced. Plants generally make use of solar energy through photosynthesis to synthesize carbohydrates from water and carbon dioxide, and supply oxygen to the atmosphere. They also carry out respiration, which involves the absorption of atmospheric oxygen and the release of carbon dioxide. There are two types of plant respiration: photorespiration, which occurs during exposure to light, and dark respiration, which occurs in dark places. Photorespiration has been observed only in $C_3$ plants. Large amounts of carbon compounds are consumed by photorespiration. In fact, it has been reported that, in some types of plants, 50% of the assimilated carbon compounds are broken down by photorespiration. However, were it be possible to selectively inhibit photorespiration without adversely affecting other metabolic processes within the plant, this would allow one to raise the productivity of crops. Improvements in rice cultivation techniques have made it possible to grow rice in cold regions. However, the low temperatures sometimes prevent rice seedlings from taking root.

In the course of research on stimulating the solar energy-fixing function of green plants, the inventors discovered that choline salts, phosphorylcholine and its salts are able to increase the efficiency of plant photosynthesis to promote crop yields. The present inventors further discovered that the above-mentioned compounds stimulate root formation and anchoring in rice seedlings. The present invention is based on the discoveries.

One object of the present invention is to provide a plant growth regulator by which crop yields, the root formation and root anchoring in rice seedlings can be promoted.

Another object of the present invention is to provide a method of increasing crop yields and a method for regulating the growth of plants, such as promoting root formation and anchoring in rice seedlings.

The present invention provides a plant growth regulator comprising as an effective ingredient a compound selected from the group consisting of a salt of choline, phosphorylcholine and a salt of phosphorylcholine.

The present invention further provides a method of promoting crop yields by applying the above plant growth regulator to plants.

The present invention still further provides a method of forming and anchoring roots of rice seedlings by applying the rice seedlings the above plant growth regulator.

According to the present invention, the effective ingredient reduces the photorespiration of the plants to promote the crop yields, to promote the formation and anchorage of the rice seedling roots.

The choline salts used as the active ingredients in the present invention may be inorganic salts such as hydrochloride, phosphate, polyphosphate, sulfate, nitrate, and carbonate salts. Organic salts such as acetate, citrate (choline dihydrogen citrate), lactate, and L(+) tartrate (choline bitartrate) salts can also be suitably used. Phosphorylcholine salts that may be used include phosphorylcholine chloride sodium salt and phosphorylcholine chloride calcium salt.

The most desirable of these choline salts are the hydrochloride, the phosphate, and the choline bitartrate. Of these, the hydrochloride is especially desirable. Phosphorylcholine chloride sodium salt is desirable as a phosphorylcholine salt.

Choline and phosphorylcholine per se are well-known and commercially available, and salts thereof can be easily produced by a conventional process. Phosphorylcholine can also be obtained by reacting choline with ortho phosphoric acid or its salt as disclosed in Japanese Patent Disclosure (Kokai) No. 52-113924.

The plant growth regulators of the present invention may be formulated for application in any known and conventional form, such as a powder, aqueous solution, or emulsion, or as a suspension in water or oil. Among the formulations just mentioned above, aqueous solution is most preferred. In the formulations, choline salt, phosphorylcholine or its salt may be contained in the amount of 1 wt% to 75 wt%. Further, the plant growth regulator of the present invention can contain another conventional agriculturally active ingredient such as fertilizer, insecticide, bactericide, and the like. In addition, a surfactant may preferably be contained in the amount of 1 wt% to 20 wt% to promote the adsorption and penetration of the active ingredient. Preferred surfactants may include nonionic surfactant such as polyoxyethylene alkyl ester and anionic surfactant such as lauryl sulfonic acid triethanolamine salt.

The amount of the invented growth regulator to be applied varies with the type of plant, the stage of plant growth, the manner of application, the time of application and the molecular weight of the regulator, but normally ranges from 100 to 10,000 grams, and preferably from 500 to 4,000 grams of regulator per hectare. The growth regulator of the present invention is generally sprayed onto the stalks and leaves of the plant in the form of an aqueous solution. An aqueous solution containing 100 to 20,000 ppm, and preferably 300 to 10,000 ppm of the growth regulator is sprayed.

When phosphorylcholine or a salt thereof is used to promote root formation, the seedlings are immersed in its aqueous solution of 1 to 500 ppm, and preferably 10 to 100 ppm.

When choline salts are used to promote root formation or anchoring in rice seedlings, the roots of the rice seedlings are generally irrigated with an aqueous solution before being transplanted, and preferably at least 10 days before transplantation. The concentration of choline salts used in this case is 10 to 1,000 ppm, and preferably 25 to 200 ppm.

Generally a good time to apply the plant growth regulators of the present invention is when photorespiration by the plant is at its peak. For instance, use at some point from the period of reproductive growth to the harvesting period for the plant is desirable. However, depending on the plant, use during the period of vegetative growth may provide more desirable effects. In other words, there are no specific limits on the period of administration.

The plant growth regulator of the present invention can be used for $C_3$ plants such as rice, wheat, beans, sugar beet, sweet potato, potato, onion and spring onion, i.e., plants that represent major food sources. When the plant growth regulator of the present invention is employed, it is capable of regulating the growth and also increasing the yields of $C_3$ plants.

Example 1

Preparation of choline salts

A mixture of 242 grams of 50% choline and 50 mℓ of pure water was cooled to 5°C in a nitrogen atmosphere and 110 g of 89% phosphoric acid was added thereto dropwise while stirring.

This gave 402 grams of a 50% choline phosphate (choline salt of phosphoric acid) solution having a pH of 4.9. This aqueous solution was concentrated to give the phosphate salt.

Aqueous solutions of various other choline salts shown in Table 1 below were prepared in the same way by using different acids. Each of these solutions was concentrated and crystals of the respective salts obtained. In cases where the salt was difficult to obtain as crystals, it was used in the form of an aqueous solution.

Table 1 gives the chemical names, formulas, and properties of several choline salts and phosphorylcholine salts thus obtained. The compound No. will be used throught the specification.

Table 1

| Compound No. | Chemical Name | Formula | Properties |
|---|---|---|---|
| 1 | choline chloride | $[(CH_3)_3N^+CH_2CH_2OH]Cl^-$ | 70 wt% aqueous solution: specific gravity - 1.095 pH 7.0 |
| 2 | choline phosphate | $[(CH_3)_3N^+CH_2CH_2OH]H_2PO_4^-$ | m.p. 200-205°C |
| 3 | choline bitartrate | $[(CH_3)_3N^+CH_2CH_2OH]C_4H_5O_6^-$ | m.p. 149-153°C |
| 4 | choline dihydrogen citrate | $[(CH_3)_3N^+CH_2OH]C_6H_7O_7^-$ | m.p. 105-107.5°C |
| 5 | phosphorylcholine chloride sodium salt | $[(CH_3)_3N^+CH_2CH_2OPO_3Na_2]Cl^- \cdot xH_2O$ | white crystals |
| 6 | phosphorylcholine chloride calcium salt | $[(CH_3)_3N^+CH_2CH_2OPO_3Ca]Cl^- \cdot xH_2O$ | browning at 270°C |
| 7 | phosphorylcholine | $[H_2PO_4CH_2CH_2N^+(CH_3)_3]OH^-$ | |

Experiment 1

Rice leaf blades were mounted in moist cotton within a chamber (acrylic resin box, 10 x 10 x 0.6 cm). The light intensity, room temperature, and relative humidity were held at 40 Klx, 25°C, and 80%, respectively. The rate of photorespiration was determined by measuring the rate of carbon dioxide discharge from the difference in carbon dioxide concentration at the chamber inlet and outlet while passing carbon dioxide-free air through the chamber at a flow rate of one liter per hour.

The carbon dioxide concentration was measured with an infrared carbon dioxide analyzer.

The prepared compounds were dissolved to various concentrations in distilled water, and adjusted to a pH of 7. One milliliter of solution was injected with a syringe through a silicone rubber plug into the moist portion of the cotton within the leaf chamber. The normal rate of photorespiration of rice leaf blades was about 2.7 mg of $CO_2$ per square decimeter ($dm^2$) per hour.

Table 2 shows the percent inhibition of photorespiration by the prepared compounds. The ratio of inhibition shown in Table 2 is defined by the following equation:

$$\text{Inhibition (\%)} = \left(1 - \frac{\text{amount of generated } CO_2 \text{ per a unit time after treatment}}{\text{amount of generated } CO_2 \text{ per a unit time before treatment}}\right) \times 100$$

Table 2

| Compound No. | Concentration (mM) | Inhibition (%) |
|---|---|---|
| 2 | 8.8 | 17.5 |
| 2 | 17.6 | 41 |
| 1 | 9.1 | 15 |
| 4 | 10.0 | 16 |
| 5 | 10<br>20 | 27<br>45 |
| 6 | 10<br>20 | 25<br>42 |

Experiment 2

One hundred liters per ten ares of various strength solutions of invented plant growth regulator to which surfactant (polyoxyethylene alkyl ether) had been added to a concentration of 200 ppm were sprayed onto potato plants (variety: Danshaku) at the peak of the flowering stage two months after planting in experimental plots.

The potatoes were harvested one month later and the weight of the harvested potatoes was measured. The results are shown in Tables 3 and 4.

Table 3

| Compound No. | Concentration (ppm) | kg/10 ares | Yield* |
|---|---|---|---|
| Untreated | – | 3,100 | 100 |
| 1 | 1,000<br>2,000 | 3,970<br>3,690 | 128<br>119 |
| 2 | 1,000<br>2,000 | 4,060<br>3,630 | 131<br>117 |
| 3 | 1,000<br>2,000 | 3,780<br>3,690 | 122<br>119 |

* Ratio to untreated plot (=100)

Table 4

| Compound No. | Concentration (ppm) | kg/10 ares | Yield* |
|---|---|---|---|
| Untreated | - | 2,900 | 100 |
| 5 | 500 | 3,630 | 125 |
| | 1,000 | 3,770 | 130 |
| | 2,000 | 3,190 | 110 |

* Ratio to untreated plot (=100)

Experiment 3

One hundred liters per ten ares of various strength solutions of invented plant growth regulator to which surfactant (polyoxyethylene alkyl ether) had been added to a concentration of 200 ppm were sprayed onto the stalks and leaves of sweet potatoes (variety: Kogane Sengan) one month after planting in experimental plots.

The sweet potatoes were harvested two months later and the weight of the harvested sweet potatoes was measured. The results are shown in Table 5.

Table 5

| Compound No. | Concentration (ppm) | kg/10 ares | Yield* |
|---|---|---|---|
| Untreated | - | 2,100 | 100 |
| 1 | 500 | 2,080 | 99 |
| | 1,000 | 2,310 | 110 |
| | 2,000 | 2,500 | 119 |
| 4 | 500 | 2,100 | 100 |
| | 1,000 | 2,270 | 108 |
| | 2,000 | 2,420 | 115 |

* Ratio to untreated plot (=100)

Experiment 4

One hundred liters per ten ares of various strength solutions of invented plant growth regulator to which surfactant (polyoxyethylene alkyl ether) had been added to a concentration of 200 ppm were sprayed onto the stalks and leaves of sweet potatoes (variety: Kogane Sengan) 1.5 months after planting in experimental plots.

The sweet potatoes were harvested two months later and the weight of the harvested sweet potatoes was measured. The results are shown in Table 6.

Table 6

| Compound No. | Concentration (ppm) | kg/10 ares | Yield* |
|---|---|---|---|
| Untreated | - | 1,990 | 100 |
| 5 | 500 | 2,180 | 110 |
|  | 1,000 | 2,380 | 120 |
|  | 2,000 | 1,950 | 98 |

*Ratio to untreated plot (=100)

Experiment 5

The basal 2 - 3 centimeters of sweet potato seedlings (variety: Kokei No. 14) were immersed for 24 hours in an aqueous solution of the invented plant growth regulators at various concentrations.

The immersed seedlings were then multicultivated in plots. On the seventh day after planting, some of the seedlings were dug up and the lengths of the new roots were measured.

Table 7 gives the results.

Table 7

| Compound No. | Concentration (ppm) | Total root length (mm) per plant |
|---|---|---|
| Untreated | - | 22 |
| 6 | 20 | 70 |
|  | 50 | 76 |
|  | 100 | 85 |

The weight of the sweet potatoes was measured 110 days after planting the seedlings, and the results in Table 8 obtained.

Table 8

| Compound No. | Concentration (ppm) | kg/10 ares | Yield* |
|---|---|---|---|
| Untreated | - | 1,890 | 100 |
| 6 | 20 | 2,360 | 125 |
|  | 50 | 2,270 | 120 |
|  | 100 | 1,850 | 98 |

* Ratio to untreated plot (=100)

Experiment 6

Spring onion (variety: Fukaya No. 22) seeds were planted (3.2 dℓ per 10 ares) on February 6, and tunnel-cultivated under polyvinyl sheeting. The tunnel sheeting was removed on April 23. On may 29, 100 liters per 10 ares of 500, 1000, and 2000 ppm solutions of Compound No. 1, to each of which had been added 200 ppm of surface active agent (lauryl sulfonic acid triethanolamine salt), were applied uniformly with a sprayer to the stems and leaves of the onion seedlings, which had grown to 15 - 20 cm in height. The number of plants per plot was 50. The onions were harvested on July 3, and the fresh weight of the onion seedlings measured. Table 9 shows the results obtained.

Table 9

|  | Mean weight/<br>plant (g) | Ratio to<br>untreated plot |
|---|---|---|
| Untreated | 38.0 | 100 |
| 500 ppm | 47.4 | 125 |
| 1000 ppm | 52.7 | 139 |
| 2000 ppm | 47.8 | 126 |

Experiment 7

Onion (variety: Franui) seedlings 15 - 20 cm in height and having 2.5 - 3 leaves were planted on May 12. On July 29, 500 grams, one kg, and two kg per hectare of Compound 1 was dissolved in 1000 liters per hectare (surface active agent, polyoxyethylene alkyl ether added, to a concentration of 300 ppm) and the solution sprayed uniformly on the stems and leaves with a sprayer. The onions were harvested on September 18 and the yields compared. Table 10 gives the results.

Table 10

|  | Mean yield<br>kg/ha | Ratio to<br>untreated plot |
|---|---|---|
| Untreated | 38,000 | 100 |
| 0.5 kg | 42,000 | 111 |
| 1 kg | 40,000 | 106 |
| 2 kg | 36,020 | 95 |

Experiment 8

On May 21, one kg, two kg, and four kg per hectare of choline chloride was dissolved in 2000 liters per hectare (surface active agent, polyoxyethylene alkyl ether added to a concentration of 200 ppm), and the solution sprayed uniformly on the stems and leaves of winter wheat (variety: Horoshiri Komugi) in the flowering stage with a sprayer. The respective solutions were applied on two plots each. The wheat was harvested one month later on July 25 and the dry weight of the above-ground portion of the plants and the wheat yields were measured. The results are given in Table 11.

### Table 11

| | Dry weight | | Yield | |
|---|---|---|---|---|
| | kg/ha | ratio* | kg/ha | ratio* |
| Untreated | 12,650 | 100 | 5,480 | 100 |
| 1 kg | 13,920 | 110 | 6,110 | 111 |
| 2 kg | 14,600 | 111 | 6,290 | 115 |
| 4 kg | 14,500 | 111 | 6,260 | 114 |

* Ratio to untreated plot (=100)

### Experiment 9

Soybean (variety: Kitakomachi) seeds were planted on May 6. On June 19, in the soybean flowering stage, one kg, two kg, and four kg per hectare of choline chloride was dissolved in 2000 liters per hectare of water as the active ingredient, surface active agent (polyoxyethylene alkyl ether, 200 ppm) added, and the solutions sprayed uniformly on the stems and leaves of the soybean plants with a sprayer. The soybeans were harvested on September 15 and the yields were measured. The results are given in Table 12.

Table 12

|  | Mean yield kg/ha | Ratio to untreated plot |
|---|---|---|
| Untreated | 4020 | 100 |
| 1 kg | 4462 | 111 |
| 2 kg | 4300 | 107 |
| 4 kg | 4383 | 109 |

Experiment 10

Paddy rice seeds (variety: Yukihikari) disinfected with a 200-fold solution of a disinfectant (manufactured by Du Pont under the trade name of Benlate) were planted in seedling boxes treated with 6 grams of 4% disinfectant (manufactured by SANKYO Co., Japan, under the trade name of Tachigalen) per box (30 x 60 x 3 cm) for soil sterilization. Twenty-four days after planting, the boxes were irrigated with 500 mℓ of choline chloride solution at varying strengths. Twenty-five days after planting, three clumps of five plants each were transplanted into 1/5000-are Wagner pots and the growth after 10 days was checked. The average temperature during this period was low at 14.8°C. The results obtained are given in Table 13.

Table 13

|  | Fresh weight* | |
|---|---|---|
|  | leaves and stem | roots |
| Untreated | 100 (0.4 g/plant) | 100 (0.28 g/plant) |
| Choline chloride (20 ppm) | 96 | 130 |
| " " (50 ppm) | 98 | 160 |
| " " (100 ppm) | 98 | 165 |

* Ratio to untreated plot

Experiment 11

Paddy rice seeds (100 g per box) (variety: Ishihikari) disinfected with a 200-fold solution of Benlate were germinated in a incubator at 32°C. Two days later, germinated paddy seeds were planted in seedling boxes filled with artificial soil and left in a seedling incubator at 32°C for two days. Five hundred mℓ of a 1000-fold solution of a disinfectant (manufactured by SHOWA DIAMOND ALKALI, Japan, under the trade name of Daconil) was applied and the seedlings grown under controlled conditions in a polyvinyl house.

Five days before transplantation, the seedling boxes were irrigated with 12.5 mg, 25 mg, or 50 mg of choline phosphate diluted in 500 mℓ of water. Thirty-five days after planting the seeds, the seedlings were transplanted into a paddy field, and growth was examined one month after transplantation. The results are given in Table 14.

Table 14

|  | mg/box | plant height (cm) | number of stems |
|---|---|---|---|
| Untreated | - | 22.3 | 4.9 |
| Choline phosphate, | 12.5 | 21.1 | 5.3 |
| "                " | 25 | 21.2 | 5.8 |
| "                " | 50 | 19.0 | 5.0 |

The mean temperatures following transplantation were as follows.

| Number of days after trans-plantation | 0-4 | 5-9 | 10-14 | 15-19 | 20-24 | 25-29 |
|---|---|---|---|---|---|---|
| Mean tempera-ture (°C) | 12.0 | 18.5 | 15.8 | 19.1 | 17.1 | 17.1 |

0146017

The roots of the seedlings treated with choline phosphate were cut at the time of transplantation, placed in a 100 cc beaker containing water, and the degree of root formation examined after 14 days of growth at 15°C.  The results are presented in Table 15.

### Table 15

|  | mg/box | (A)<br>root<br>length | (B)<br>number<br>of roots<br>per plant | (A)x(B)<br>rooting<br>strength | emergence<br>or root<br>hairs |
|---|---|---|---|---|---|
| Untreated | – | 0.7 cm | 3.3 | 2.3 | scant |
| Choline salt | 12.5 | 1.1 cm | 2.5 | 2.8 | abundant |
| " " | 25 | 1.3 cm | 4.0 | 5.2 | abundant |
| " " | 50 | 1.0 cm | 3.2 | 3.2 | abundant |

Claims:

1. A plant growth regulator comprising as an active ingredient at least one compound selected from the group consisting of a salt of choline, phosphorylcholine, and a salt of phosphorylcholine.

2. The plant growth regulator as defined in claim 1, characterized in that the active ingredient is· choline chloride, choline phosphate, choline bitartrate, phosphorylcholine chloride sodium salt.

3. The plant growth regulator as defined in claim 1 or 2, characterized in that the plant growth regulator is in the form of aqueous solution.

4. A method of increasing the crop yields of $C_3$ plants comprising applying the plants the plant growth regulator of any one of claims 1 to 3.

5. The method as defined in claim 4, characterized in that the plant growth regulator is sprayed onto the leaves and stems of the plants in the form of an aqueous solution.

6. The method as defined in claim 5, characterized in that the active ingredient of the plant growth regulator is applied in the amount of 100 to 10,000 grams per hectare.

7. A method of promoting root formation of paddy rice comprising applying the seedling of the paddy rice the plant growth regulator of any one of claims 1 to 3.

8. The method as defined in claim 7, characterized in that the plant growth regulator is in the form of an aqueous solution and the solution is applied to the seedling by irrigating the seedling with the solution.

9. The method as defined in claim 8, wherein the active ingredient of the plant growth regulator is a salt of choline, and the concentration thereof in the solution is 10 to 1,000 ppm.

10. The method as defined in claim 8, wherein the active ingredient of the plant growth regulator is phosphorylcholine or a salt thereof, and the
concentration thereof in the solution is 1 to 500 ppm.

European Patent
Office

EUROPEAN SEARCH REPORT

0146017
. Application number

EP 84 11 4265

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 059 412 (STATE OF ISRAEL, MINISTRY OF AGRICULTURE)<br><br>* Page 1, lines 3-27; page 2, lines 9-42; claims * | 1-6 | A 01 N 57/12<br>A 01 N 33/12 |
| A | | 7-9 | |
| | --- | | |
| X | C.R. ACAD. SC. PARIS, Vol. 282, No.1, Serie D, January 5, 1976, pages 49-52, MONTREUIL, (FR). A.VERGER et al.: "Histophysiologie végétale.-Effets comparés de quelques composés triméthylammoniums quaternaires sur la croissance et le développement de tissus de racine de Cichorium intybus L. cultivés in vitro".<br><br>* Whole document * | 1-6 | |
| A | | 7-10 | TECHNICAL FIELDS SEARCHED (Int. Cl.4)<br><br>A 01 N |
| | --- | | |
| X | US-A-4 150 966 (H.TSUCHIYA et al.)<br><br>* Whole document * | 1,3-5 | |
| | --- | | |
| X | CHEMICAL ABSTRACTS, Vol.77, No.7, August 14, 1972, page 129, abstract no. 44260d, COLUMBUS, OHIO, (US).<br><br>-/- | 1,2 | |

The present search report has been drawn up for all claims

| Place of search | Date of completion of the search | Examiner |
|---|---|---|
| THE HAGUE | 11-03-1985 | FLETCHER A.S. |

**European Patent Office**

**EUROPEAN SEARCH REPORT**

0146017
Application number

EP 84 11 4265
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| | A.KUMAR et al.: "Auxins and vitamins as related to growth and chlorophyll development in Dolichos lablab mesophyll tissues in culture". <br><br> & Indian J. Exp. Biol. 1972, 10(1), 65-7 <br><br> * Whole abstract * <br><br> --- | | |
| X | CENTRAL PATENTS INDEX, BASIC ABSTRACTS JOURNAL, Section C, AGDOC week 45, November 1983, abstract 810816, Derwent publications Ltd., LONDON, (GB). "Plant growth regulator especially for rice and turf - contains e.g. N-methyl isonicotinic acid (4 chloro-2-(alpha-hydroxybenzyl)) anilide and e.g. 2,4di:chloro phenoxy acetic acid". <br><br> & JP-A-83 164 501 (CHUGAI PHARMACEUTICAL K.K.)(29-09-83) <br><br> * Whole abstract * <br><br> ----- | 1,3-8 | TECHNICAL FIELDS SEARCHED (Int. Cl.4) |

The present search report has been drawn up for all claims

| Place of search | Date of completion of the search | Examiner |
|---|---|---|
| THE HAGUE | 11-03-1985 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82